Europäisches Patentamt

European Patent Office

Office européen des brevets

(19)

(11) EP 0 890 925 A2

(12) EUROPEAN PATENT APPLICATION

(43) Date of publication:
13.01.1999 Bulletin 1999/02

(51) Int Cl.⁶: **G06T 15/10**

(21) Application number: 98305091.5

(22) Date of filing: 29.06.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 30.06.1997 US 884692

(71) Applicant: **Sun Microsystems, Inc.**
**Palo Alto, California 94303-4900 (US)**

(72) Inventors:
• **Deering, Michael F.**
  **Los Altos, California 94024 (US)**
• **Oberoi, Ranjit S.**
  **Saratoga, California 95070 (US)**

(74) Representative: **Harris, Ian Richard et al**
**D. Young & Co.,**
**21 New Fetter Lane**
**London EC4A 1DA (GB)**

(54) **Computer system including a three-dimensional graphics accelerator which includes improved texture mapping capabilities**

(57)     A computer system with improved texture mapping capabilities. The computer system includes a display screen, a bus for transferring data, and a system memory coupled to the bus for storing a texture map. The computer system further includes a processor coupled to the bus and configured to execute an application which renders a geometric primitive on the display screen. The processor is also configured to generate information corresponding to the geometric primitive and partition the geometric primitive according to a plurality of tiles organized as a grid. Each of the plurality of tiles in the grid corresponds to a portion of the texture map. The computer system further includes a graphics accelerator coupled to the bus. The graphics accelerator includes a texture memory cache configured to store a portion of the texture map corresponding to one of the plurality of tiles. The processor is configured to transfer a portion of the texture map corresponding to a first of the plurality of tiles from the system memory to the graphics accelerator. which stores the portion of the texture map corresponding to the first of the plurality of tiles into the texture memory cache. The processor is further configured to tessellate a portion of the geometric primitive corresponding to the first of the plurality of tiles into a plurality of sub-polygons, and transfer information corresponding to each of these plurality of sub-polygons to the graphics accelerator. The graphics accelerator is configured to render each of the plurality of sub-polygons according to the portion of the texture map corresponding to the first of the plurality of tiles.

FIG. 3

## Description

### Field of the Invention

The present invention relates to a 3-D graphics accelerator in a computer system, and more particularly to an improved architecture for a 3-D graphics accelerator which stores texture maps in the system memory and transfers tessellated portions to a cache memory in the graphics accelerator.

### Description of the Related Art

A three dimensional (3-D) graphics accelerator is a specialized graphics rendering subsystem for a computer system which is designed to off-load the 3-D rendering functions from the host processor, thus providing improved system performance. In a system with a 3-D graphics accelerator, an application program executing on the host processor of the computer system generates three dimensional geometry data that defines three dimensional graphics elements for output on a display device. The application program causes the host processor to transfer the geometry data to the graphics accelerator. The graphics accelerator receives the geometry data and renders the corresponding graphics elements on the display device.

One of the goals of many computer graphics systems is to be able to render objects that are realistic to the user. The problem of visual realism, however, is quite complex. Objects in the "real world" include an incredible amount of detail, including subtle variations in color, reflections, and surface irregularities.

There are various approaches in adding surface detail to an object. A simple approach involves the use of surface-detail polygons to show features on top of a base polygon. As the surface detail to be represented becomes more intricate, however, this approach becomes less effective. An alternate approach, known as texture mapping. maps an image (such as a bit map) onto a surface. For example, a bit map version of a painting with intricate detail might be texture mapped into a polygon representing the frame of the painting. In many cases, use of this technique often achieves more realistic results than the use of polygons to represent surface detail.

A texture map is a two dimensional array made up of elements called texels (texture elements). Each pixel on the display device maps to at least one texel, which includes various color values. For each pixel on the display device that is to be texture mapped, the color values associated with the corresponding texels are employed to generate a final color value. All relevant texels are considered to prevent aliasing problems.

Prior art texture mapping systems employ dedicated texture memory on the graphics accelerator board. Since this memory must be low latency and high bandwidth, DRAM's do not typically suffice. Instead, more expensive memories are employed, adding to system cost. Additionally, this texture memory is generally not able to be used for any other purpose. This is particularly problematic in graphics accelerators which include more than one rendering chip. In such cases, a copy of texture memory is needed for each extra rendering chip, further increasing system cost and board space requirements for the graphics accelerator. The size of images that can be texture mapped is limited by the size of the on-board texture memory. In view of the constantly increasing demand for more intricate texture mapping in 3-D graphics systems, the performance of the graphics system is comprised.

Therefore, an improved 3-D graphics accelerator architecture is desired which provides improved texture mapping capabilities with reduced memory and board space requirements.

### Summary of the Invention

Particular and preferred aspects of the invention are set out in the accompanying independent and dependent claims. Features of the dependent claims may be combined with those of the independent claims as appropriate and in combinations other than those explicitly set out in the claims.

The present invention comprises a computer system with improved texture mapping capabilities. The computer system includes a display screen, a bus for transferring data, and a system memory coupled to the bus for storing a texture map. The texture map may include a plurality of mip map levels, which each comprise a version of a given texture image at a different resolution. The computer system further includes a processor coupled to the bus and configured to execute an application which renders a geometric primitive on the display screen. The processor is also configured to generate information corresponding to the geometric primitive. The processor is further configured to partition the primitive according to a plurality of tiles organized as a grid in texture space. Each of the plurality of tiles in the grid corresponds to a portion of the texture map, and includes a plurality of texels, preferably organized as a square.

The computer system further includes a graphics accelerator coupled to the bus. The size of each of the plurality of tiles is equal to the size of a texture memory cache within a graphics accelerator in the computer system. The texture memory cache may additionally include the mip map levels for the corresponding portion of the texture cache. The texture memory cache is thus configured to store a portion of the texture map corresponding to one of the plurality of tiles. Adjacent tiles in the grid share a common row or column of texels to prevent unwanted visual effects during rendering. To improve performance, the texture memory cache may have a plurality of buffers such that one portion of the texture map may be written to one of the plurality of buffers while a given sub-polygon is rendered according to a portion of the texture map stored in another of the plurality of buffers.

The processor is configured to transfer a portion of the texture map corresponding to a first of the plurality of tiles from the system memory to the graphics accelerator, which stores the portion of the texture map corresponding to the first of the plurality of tiles into the texture memory cache. The processor is further configured to tessellate a portion of the geometric primitive corresponding to the first of the plurality of tiles into a plurality of sub-polygons and transfer information corresponding to each of these plurality of sub-polygons to the graphics accelerator. The graphics accelerator is configured to render each of the plurality of sub-polygons at a pixel level according to the portion of the texture map corresponding to the first of the plurality of tiles.

The use of the texture memory cache virtually eliminates any restriction on texture map size, thereby meeting demands for ever-increasing texture sizes. The quality of textured images is maintained, as textures are rendered at the pixel level in the graphics accelerator. The texture memory cache also reduces cost and on-board memory requirements for the graphics accelerator.

**Brief Description of the Drawings**

A better understanding of the present invention can be obtained when the following detailed description of the preferred embodiment is considered in conjunction with the following drawings, in which:

Figure 1 illustrates a computer system which includes a three dimensional (3-D) graphics accelerator according to the present invention;

Figure 2 is a simplified block diagram of the computer system of Figure 1;

Figure 3 is a block diagram illustrating the 3-D graphics accelerator according to the preferred embodiment of the present invention;

Figure 4 is a block diagram illustrating one of the draw processors in the 3-D graphics accelerator according to the preferred embodiment of the present invention;

Figure 5 is a flowchart diagram illustrating an improved method of texture mapping according to the preferred embodiment of the present invention;

Figure 6 is a diagram illustrating the process of tiling a geometric primitive according to the preferred embodiment of the present invention;

Figure 7 is a block diagram illustrating the texture memory cache interface in the preferred embodiment of the present invention;

Figure 8 is a block diagram of the texture memory cache in the preferred embodiment of the present invention; and

Figure 9 is a diagram illustrating the tessellation of a tiled geometric primitive according to one embodiment of the present invention.

**Detailed Description of the Embodiments**

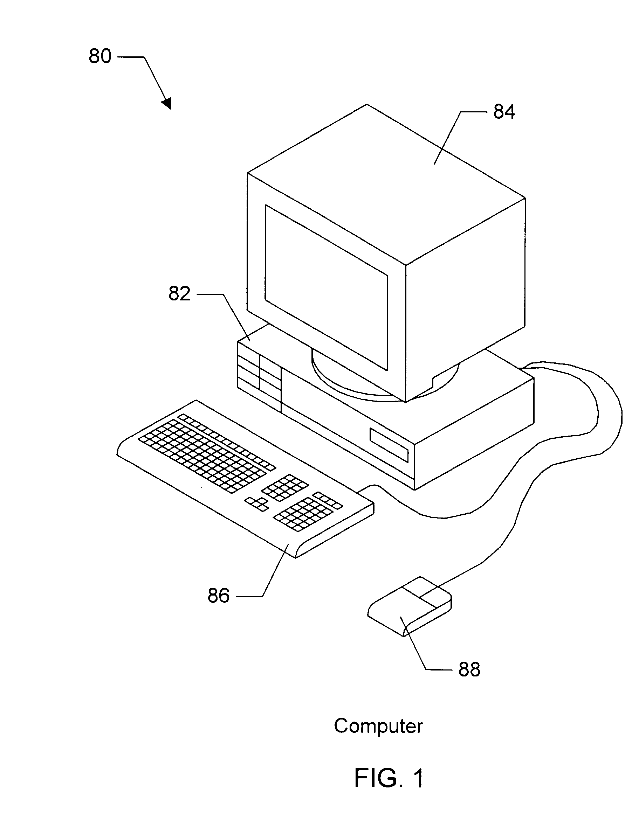

Figure 1 - Computer System

Referring now to Figure 1, a computer system 80 which includes a three-dimensional (3-D) graphics accelerator according to the present invention is shown. As shown, the computer system 80 comprises a system unit 82 and a video monitor or display device 84 coupled to the system unit 82. The display device 84 may be any of various types of display monitors or devices. Various input devices may be connected to the computer system, including a keyboard 86 and/or a mouse 88, or other input. Application software may be executed by the computer system 80 to display 3-D graphical objects on the video monitor 84. As described further below, the 3-D graphics accelerator in the computer system 80 enables the display of three dimensional graphical objects with improved performance.

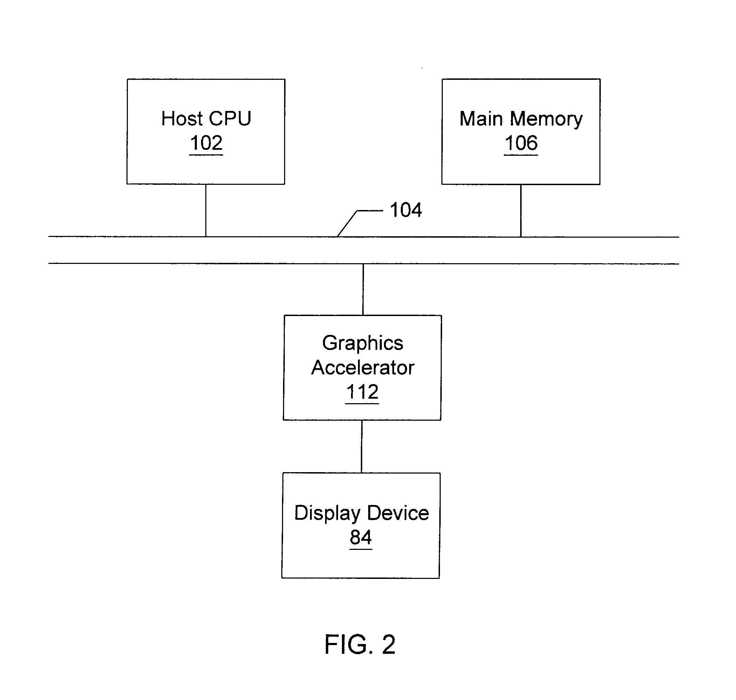

Figure 2 - Computer System Block Diagram

Referring now to Figure 2, a simplified block diagram illustrating the computer system of Figure 1 is shown. Elements of the computer system which are not necessary for an understanding of the present invention are not shown for convenience. As shown, the computer system 80 includes a central processing unit (CPU) 102 coupled to a high speed bus or system bus 104. A system memory 106 is also preferably coupled to the high speed bus 104.

The host processor 102 may be any of various types of computer processors, multi-processors and CPUs. The system memory 106 may be any of various types of memory subsystems, including random access memories and mass storage devices. The system bus or host bus 104 may be any of various types of communication or host computer buses for communication between host processors, CPUS, and memory subsystems, as well as specialized subsystems. In the preferred embodiment, the host bus 104 is the UPA bus, which is a 64 bit bus operating at 83 MHz.

A 3-D graphics accelerator 112 according to the present invention is coupled to the high speed memory bus 104. The 3-D graphics accelerator 112 may be coupled to the bus 104 by, for example, a cross bar switch or other bus connectivity logic. It is assumed that various other peripheral devices, or other buses, may be connected to the high speed memory bus 104, as is well known in the art. It is noted that the 3-D graphics accelerator may be coupled to any of various buses, as desired. As shown, the video monitor or display device 84 connects to the 3-D graphics accelerator 112.

The host processor 102 may transfer information to and from the graphics accelerator 112 according to a programmed input/output (I/O) protocol over the host bus 104. Alternately, the graphics accelerator 112 accesses the memory subsystem 106 according to a direct memory access (DMA) protocol or through intelligent bus mastering.

Computer system 80 is configured to perform texture mapping for one or more polygons specified by a graphics application program executing on host processor 102. Host processor 102 tessellates the one or more polygons, sending the resulting sub-polygons to graphics accelerator 112 via host bus 104. The corresponding portion of the texture map is also conveyed with each of the sub-polygons. Each sub-polygon conveyed to graphics accelerator 112 is conveyed to a draw processor for texture mapping and rendering. As will be described below, computer system 80 is advantageously configured to exhibit increased performance for texturing mapping.

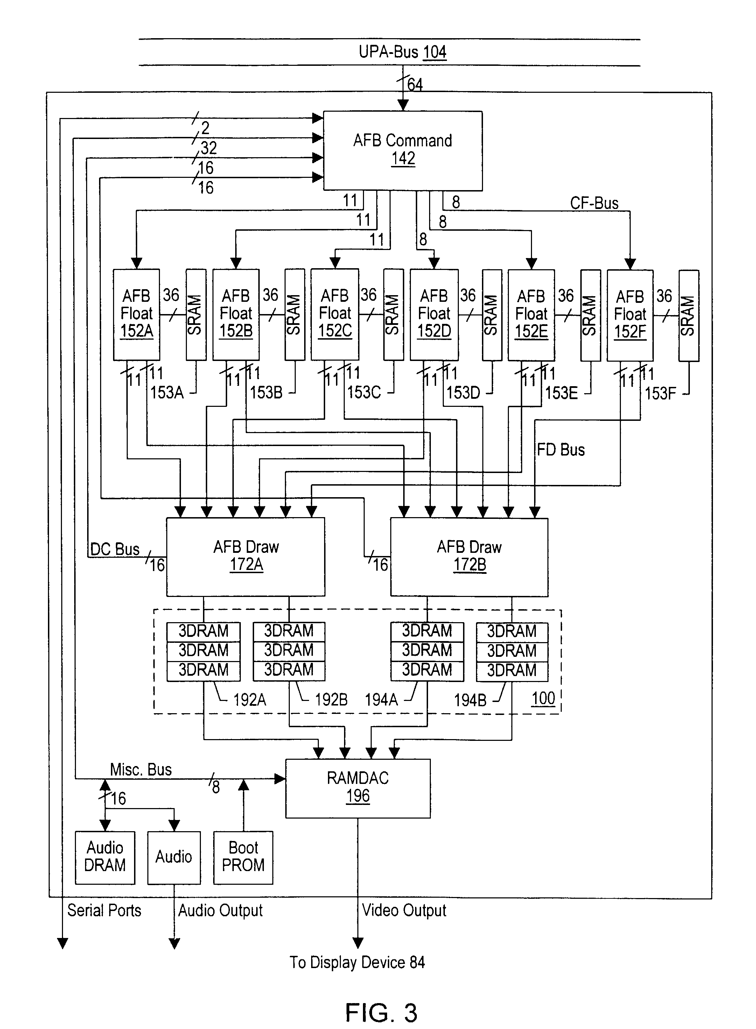

Figure 3 - Graphics Accelerator

Referring now to Figure 3, a block diagram is shown illustrating the graphics accelerator 112 according to the preferred embodiment of the present invention. As shown, the graphics accelerator 112 is principally comprised of a command block 142, a set of floating-point processors 152A - 152F, a set of draw processors 172A and 172B. a frame buffer 100 comprised of 3DRAM, and a random access memory/digital-to-analog converter (RAMDAC) 196.

As shown, the graphics accelerator 112 includes command block 142 which interfaces to the memory bus 104. The command block 142 interfaces the graphics accelerator 112 to the host bus 104 and controls the transfer of data between other blocks or chips in the graphics accelerator 112. The command block 142 also pre-processes triangle and vector data and performs geometry data decompression.

The command block 142 interfaces to a plurality of floating point blocks 152. The graphics accelerator 112 preferably includes up to six floating point processors labeled 152A-152F, as shown. The floating point processors 152A - 152F receive high level drawing commands and generate graphics primitives, such as triangles, lines, etc. for rendering three-dimensional objects on the screen. The floating point processors 152A - 152F perform transformation, clipping, face determination, lighting and set-up operations on received geometry data. Each of the floating point processors 152A - 152F connects to a respective memory 153A - 153F. The memories 153A - 153F are preferably 32k x 36-bit SRAM and are used for microcode and data storage.

Each of the floating point blocks 152A-F connects to each of two draw processors 172A and 172B. The graphics accelerator 112 preferably includes two draw processors 172A and 172B, although a greater or lesser number may be used. The draw processors 172A and 172B perform screen space rendering of the various graphics primitives and operate to sequence or fill the completed pixels into the 3DRAM array. The draw processors 172A and 172B also function as 3DRAM control chips for the frame buffer 100. The draw processors 172A and 172B concurrently render an image into the frame buffer 100 according to a draw packet received from one of the floating-point processors 152A - 152F, or according to a direct port packet received from the command processor 142.

Each of the floating point blocks 152A-F preferably operates to broadcast the same data to the two drawing blocks 172A and 172B. In other words, the same data is always on both sets of data lines coming from each floating point block 152. Thus, when the floating point block 152A transfers data, the floating point block 151A transfers the same data over both parts of the FD-bus to the draw processors 172A and 172B.

Each of the respective drawing blocks 172A and 172B couple to frame buffer 100, wherein frame buffer 100 comprises four banks of 3DRAM memory 192A - B and 194A - B. The draw processor 172A couples to the two 3DRAM banks 192A and 192B, and the draw processor 172B couples to the two 3DRAM banks 194A and 194B, respectively. Each bank comprises three 3DRAM chips, as shown. The 3DRAM memories or banks 192A-B and 194A-B collectively form the frame buffer 100, which is 1280 x 1024 by 96 bits deep. The frame buffer stores pixels corresponding to 3-D objects which are rendered by the draw processors 172A and 172B.

Each of the 3DRAM memories 192A-B and 194A-B couple to a RAMDAC (random access memory digital-to-analog converter) 196. The RAMDAC 196 comprises a programmable video timing generator and programmable pixel clock synthesizer, along with cross-bar functions, as well as traditional color look-up tables and triple video DAC circuits. The RAMDAC 196 in turn couples to the video monitor 84.

The command block is preferably implemented as a single chip. Each of the floating point processors 152 are preferably implemented as separate chips. In the preferred embodiment, up to six floating point blocks or chips 152A-F may be included. Each of the drawing blocks or processors 172A and 172B also preferably comprise separate chips. For more information on different aspects of the graphics accelerator architecture of the preferred embodiment, please see related co-pending application Serial No. 08/673,492 entitled "Three-Dimensional Graphics Accelerator With Direct Data Channels for Improved Performance", and related co-pending application Serial No. 08/673,491 entitled "Three-Dimensional Graphics Accelerator Which Implements multiple Logical Buses Using Common Data Lines for Improved Bus Communication". both filed on July 1, 1996.

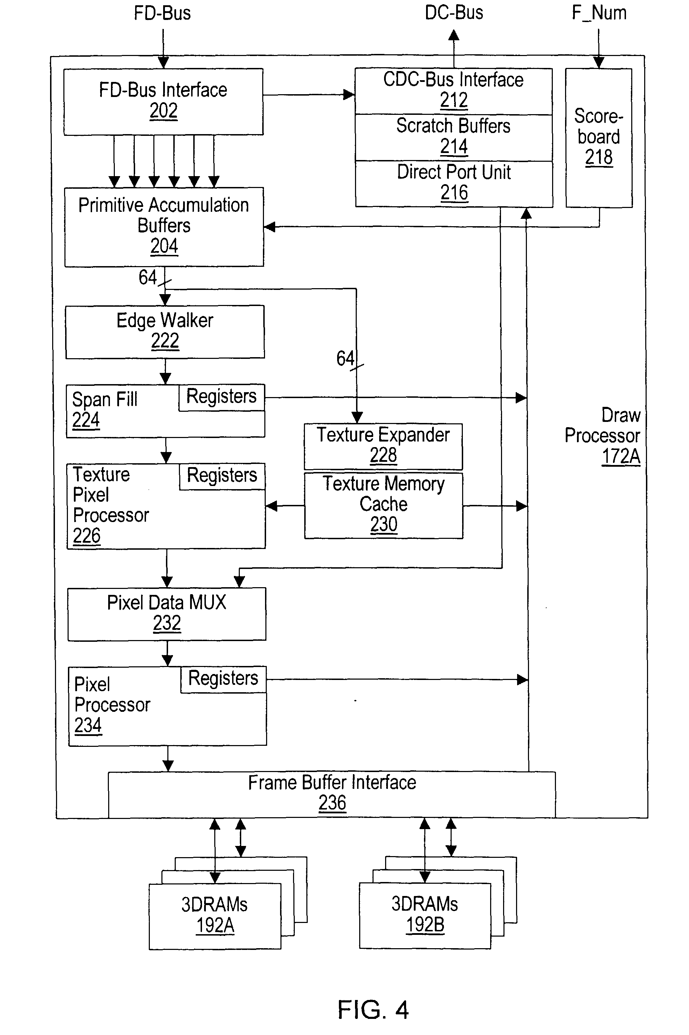

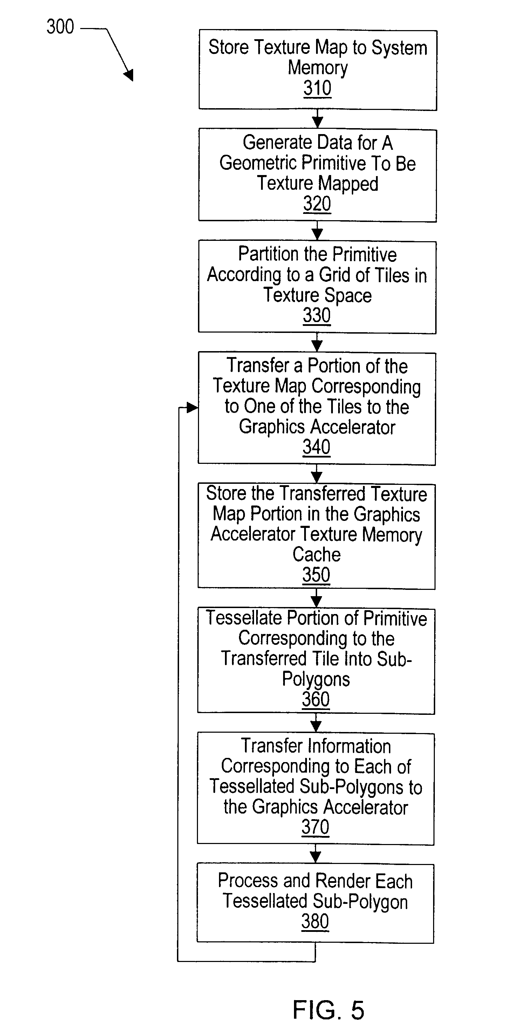

As described above, command block 142 receives commands and data from host processor 102, including texture map data and corresponding primitives. These primitives are transformed by floating point processors 152 and conveyed to draw processors 172 for rendering into frame buffers 192 and 194. The texture map to be applied to the transferred primitives is stored in a texture memory cache within draw. processors 172, which are discussed generally with reference to Figure 4. The texture mapping methodology of computer system 80. however, is discussed more specifically with reference to Figures 5 through 9.

Figure 4 - Draw Processor Block Diagram

Referring now to Figure 4, a block diagram illustrating draw processor 172A is shown. Each of draw processors 172A and 172B are identical, and thus only one is described here for convenience. The draw processor 172A manages the sequencing of the 3DRAM chips. Each draw processor 172A comprises 3DRAM scheduling logic for both internal pixel caches and video output refresh. These resources are controlled by queuing up rendered pixels before they reach the 3DRAM and snooping the pixel addresses in this queue to predict 3DRAM cache misses.

As shown, each draw processor 172 includes an FD bus interface block 202 for interfacing to the FD bus. The FD bus interface block 202 couples to CDC bus interface logic 212. The CDC bus interface logic 212 couples to scratch buffers 214 and a direct port unit 216. The direct port unit 216 receives input from frame buffer interface logic 236 and provides an output to pixel data mux logic 232. The CDC bus interface logic 212 also couples to provide output data to the DC bus. The FD bus interface 202 provides outputs to primitive accumulation buffers 204.

The draw processor 172 also includes scoreboard 218 which keeps track of primitive ordering as specified by the command processor 142. As shown. the scoreboard logic receives an F_Num input and provides an output to the primitive accumulation buffers 204. The command block 142 provides a 3-bit code to the draw processor 172 every time a (unicast) primitive is copied into one of the CF-bus output FIFOs. The code specifies which of the six floating point block processors 152A-152F receives the primitive. The code also includes a bit which indicates whether the primitive is ordered or unordered. All ordered primitives are required to come out in the order that they where put in. Unordered primitives may be taken from the primitive accumulation buffers 204 whenever they become available. Some primitives, such as text and markers, output multiple primitives for each primitive input, and these primitives are preferably placed in unordered mode for efficiency. However, all attributes sent to the draw processor 172 must remain ordered relative to primitives they might modify. In addition, there are cases with lines and triangles where strict ordering must also be preserved. The scoreboard logic 218 keeps track of at least 64 primitives. The scoreboard logic 218 provides a signal back to the command block 142 when the scoreboard logic 218 is close to being full, in order to prevent overflowing the scoreboard buffer 218.

As mentioned above, the primitive accumulation buffers 204 receive outputs from the FD-bus interface 202 and from the scoreboard logic 218. The primitive accumulation buffers 204 provide an output to edge walker logic 222 which in turn provides an output to span fill logic 224. The span fill logic 224 provides an output to a texture pixel processor 226. The span fill logic 224 also provides an output to the direct port unit 216. The primitive accumulation buffers 204 also provide an output to texture expander logic 228. The texture expander logic 228 couples to texture memory cache 230. The texture memory cache 230 provides data to the texture pixel processor 226. The texture memory cache 230 also provides data to the direct port unit 216. The texture pixel processor 226 and the direct port unit 216 each provide data to the pixel data multiplexer 232. The pixel data multiplexer 232 provides its output to a pixel processor 234. The pixel processor 234 provides its output to the frame buffer interface 236, and also provides output to the direct port unit 216.

The primitive accumulation buffers 204 are used to accumulate primitive data until a complete primitive has been received. Thus, as data is collected from the six floating point processors 152A-152F, the data eventually forms complete primitives. The primitive accumulation buffers 204 include enough room to hold one complete primitive, plus sufficient storage to hold a portion of a second primitive to maintain the pipeline flowing smoothly. The six primitive accumulation buffers 204 are filled as data comes in from each of the six floating point processors 152A - 152F. As soon as the primitive has been fully received. in general the next one will be coming behind it. Thus, the primitive accumulation buffers 204 include sufficient extra buffering to transfer the completed primitive out of the primitive accumulation buffer 204 to the edge walker logic 222 before the data gets full from the data coming in from the next primitive. In the preferred embodiment, the primitive accumulation buffers 204 are several words larger than the largest primitive (triangle) that will be processed. The primitive accumulation buffers 204 provide a 64-bit output to the edge walker logic 222. The primitives are removed from the primitive accumulation buffers 204 one at a time based on the contents of the scoreboard logic 218.

The edge walker logic 222 partitions primitives into pieces that may easily be handled by the span fill unit 224. For triangles, the edge walker logic 222 walks along the two current edges and generates a pair of vertical spans adjusted to the nearest pixel sample point, which are then sent to the span fill unit 224. The edge walker unit 222 also performs similar adjustment for lines, sending a line description to the span field unit 224 that is very similar to a triangle span. The edge walker logic 222 comprises two 16 x 24 multipliers used to perform these adjustments. The edge walker logic 222 further includes several adders which keep track of counts used to make other computations. Primitives other than triangles and lines are split up depending on the most efficient use of resources. Both jaggy and anti-aliased dots are sent straight through the logic with a minimum of adjustments, such as adding .5 to jaggy dots. Big dots are provided through the edge walker logic 222 as individual pixels. The edge walker logic 222 converts polygons and rectangles to horizontal spans. The edge walker logic 222 does not modify Bresenham lines in any way before being sent onto the span fill unit 224.

The span fill unit 224 performs an interpolation of values across arbitrarily oriented spans, usually for triangles and lines. and also performs filter weight table look ups for anti-aliased lines. For optimized primitives, including triangle span pairs, rectangle and polygon spans, and anti-aliased lines and dots, two pixels are generated per cycle. All other primitives generate one pixel per cycle. The final stage of the span fill unit 224 also performs dithering, converting 12-bit colors to 8-bit values using a 4 x 4 screen space dither pattern. The span fill logic 224 provides output to the texture pixel processor 226.

The texture pixel processor 226 performs texture calculations and controls the look up of texels in the texture memory cache 230. The texture pixel processor 226 produces a color to be merged in to the pixel by the pixel processor 234. The texture pixel processor 226 passes data onto pixel data multiplexer 232 for all other primitives except for textured triangles.

As mentioned above, the primitive accumulation buffers 204 provide an output to the texture expander 228. The texture expander 228 operates to expand received textures for storage in the texture memory cache 230. The texture memory cache 230 is thus loaded directly from the primitive accumulation buffers 204 and is connected to the texture pixel processor for texel look-ups. The texture memory cache 230 is designed to hold enough data to texture map a 16 x 16 texel region, including all of the smaller mipmaps. The texture memory cache 230 is preferably double-buffered so than one buffer can be loaded while the current buffer is in use. It is noted that the 16 x 16 texel region is actually stored as a 17 x 17 array to enable the interpolation to operate correctly.

As mentioned above, the pixel data multiplexer 232 receives input data from the texture pixel processor 226 and the direct port unit 216. The pixel data mux logic 232 arbitrates between pixels coming from the span fill unit 224 and those coming from the CD bus. Pixels from the CD bus are always given priority. The pixel data multiplexer 232 provides its output to the pixel processor 234.

The pixel processor 234 performs blending, anti-aliasing, depth cueing and set up for logical operations in the 3DRAM 192 and 194. The pixel processor 234 also comprises logic which is operable to prevent a pixel write for operations such as line patterning, stencil patterning, V port clipping, and so forth. The pixel processor 234 provides an output to the frame buffer interface 236.

The frame buffer interface 236 comprises logic necessary to read and write pixels from the 3DRAM memories 192A-B. The frame buffer interface 236 manages the level 1 (L1) and level 2 (L2) caches in the 3DRAM chips. This is performed by looking ahead to the pixels to be written and paging in the needed cache while other pixel accesses are occurring. The frame buffer interface 236 in turn couples to 3DRAM memories 192A and 192B as shown.

Figure 5 - Texture Mapping Overview

Referring now to Figure 5, a texture mapping method 300 is shown according to the preferred embodiment of the present invention. Each step is discussed generally with reference to Figure 5. and more specifically below.

In step 310, host processor 102 stores a texture map into system memory 106. A texture map is a two dimensional rectangular array, each element of which is generally 8 to 32 bits long. The most common texture map is a raster image, with each element 24 bits long, representing three color components: red, blue, and green. The array size is typically 1024 x 1024, but graphics accelerator 112 does not impose any significant size limits, since the texture map is stored in system memory 106 or the virtual memory of host processor 102. Each array element of the texture map is called a texture element or *texel.* In one embodiment, a texel may have one to four channels, each eight bits long. A 24 bit texel represents a non-indexed color of three channels. Add an alpha component to it and it becomes a 32 bit, four-channel texel.

In one embodiment, multiple versions of the texture map (called mip map levels) are stored in memory 106, each with a different degree of resolution. As described below, the use of mip maps allows portions of an object to be texture mapped more rapidly with regard to their respective positions in perspective space.

In one embodiment. a mip map is stored for the texture map in system memory 106. A mip map is a pyramid of filtered versions of the same texture map. Each map has one-half the linear resolution of its preceding map, and has therefore one quarter the number of texels. The memory cost of this organization, where the coarsest level has only one texel, is 4/3 (1 + ¼ + 1/6 +....) the cost of the original map. The acronym mip stands for "multum in parvo", a Latin phrase meaning " many things in a small place". The mip map scheme thus provides pre-filtered textures, one of which is selected at run time for use in rendering. In general, this theoretical level will lie between two adjacent pre-calculated levels, and will therefore require interpolation to the theoretical level. Within each map, bilinear interpolation may be needed if the texel to be looked up is not exactly on the integer boundaries. Similar two-dimensional linear interpolations are computed in each mip map when scaled (u,v) values required for texture table lookup are not integer values. To assure continuity during animation, the effects of the four texels which enclose the scaled (u, v) are considered, based upon their linear distances from the reference point in texel space. For example, if the scaled (u, v) values are (3.7,6.8), the weighted average of texels (3, 6), (4, 6), (3, 7), and (4, 7) is taken. This and other interpolation options are described in further detail below.

In step 320, host processor 102, executing a graphics application program, generates a given geometric primitive, along with one or more corresponding parameters. The application program also specifies that the primitive is to be textured mapped by graphics accelerator 112. Parameters corresponding to the primitive may include colors, normal, and three-dimensional model space coordinates.

In step 330, host processor 102 partitions the given geometric primitive according to a plurality of tiles arranged as a grid in texture space. As will described below, graphics accelerator 112 is configured to perform texture mapping on a region corresponding to the size of one of the plurality of tiles. Because graphics accelerator 112 supports relatively large triangles (greater than 1000 pixels), a given geometric primitive will typically be larger than a single tile. Host processor 102 therefore partitions the primitive. Each tile in the grid represents a portion of the texture map, and optionally, a portion of the geometric primitive.

In step 340, host processor 102 transfers the texture map portion corresponding to one of the given tiles to the graphics accelerator 112. In the preferred embodiment. the texture map portion is conveyed to FD-bus interface 202 in one of draw processors 172. The mip map levels corresponding to the texture map portion are also transferred.

In step 350, graphics accelerator 112 stores the texture map portion to texture memory cache 230. In one embodiment, texture memory cache 230 is double-buffered, such that a portion of a given primitive may be rendered according to a texture map portion stored in one of the buffers of cache 230 while graphics accelerator 112 loads a subsequent texture map portion (corresponding to a different tile) in the second buffer of cache 230. Performance of texture memory cache 230 is thus advantageously increased.

In step 360, host processor 102 tessellates, or breaks into smaller parts, the portion of the geometric primitive corresponding to the tile whose texture map portion was transferred in step 340. The portion of the geometric primitive is tessellated into a plurality of sub-polygons, typically triangles (referred to herein as "sub-triangles" to differentiate from the larger geometric primitive which may also be a triangle). In one embodiment, the number of tessellated triangles for a tile enclosing a portion of a primitive is between one and five.

In step 370, host processor 102 transfers these tessellated sub-triangles and corresponding attributes to graphics accelerator 112. Command block 142 receives the tessellated sub-triangles of the tile, possibly as a triangle strip. As described above, each textured sub-triangle vertex contains two texture coordinates (u and v) over and above those needed for a non-textured triangle. In one embodiment, then, a sub-triangle may include up to 12 parameters which are transferred to command block 142: three position coordinates (x, y, z), three normal coordinates (Nx, Ny, Nz) three color values (R, G, B) an alpha value, and the two texture coordinates (u and v). The texture coordinates are used to look up the texel values from the texture map for a particular pixel. There is some scaling involved, since these coordinates linearly range from 0.0 to 1.0 over the entire texture map. Texture coordinates are related to the model space by an affine transformation, which involves a linear transformation component and a translation component.

Finally, in step 380, graphics accelerator 112 processes each transferred sub-triangle and performs texture mapping on a pixel-by-pixel basis. After receiving the transferred sub-triangles for a particular texture tile, command block 142 transmits each of the sub-triangles to one of floating point processors 152. The floating point processors 152 process the sub-triangles as normal triangles with additional operations for texturing, including conversion from two-dimensional texture coordinates (u, v) to a normalized three-dimensional homogeneous space (u/w, v/w, l/w). The use of homogeneous coordinates allows for linear interpolation of texture coordinates. The original texture coordinates can be recovered for each pixel by dividing the first two homogeneous coordinates by (l/w).

For lighting textured triangles, the diffuse color is given by the texture map, which varies from pixel to pixel, and the specular color is a material property of the triangle, which remains constant over all of its pixels. This means that for Gouraud shading, the specular lighting component can be interpolated in the usual way. The ambient and diffused lighting, however, require that per vertex lighting be done in one of floating point processors 152 using white color (r = g = b = 1.0). This color is then interpolated to the pixel level by one of draw processors 172 and multiplied by the texture color to obtain the contribution from diffuse and ambient lighting.

Draw processors 172 interpolate the homogeneous texture coordinates in a manner similar to that used for interpolating color, alpha, or depth (Z) parameters. Basically, these parameters are walked along the edges of the triangle by using their derivatives, and then across the horizontal spans, by adding all or part of its horizontal derivative, which is computed once for the entire triangle. Thus the homogeneous texture coordinates are computed for each pixel. Finally, at each pixel, the raw texture coordinates are recovered by dividing u and v by (1/w). These coordinate values are used in an inverse mapping algorithm to look up the corresponding texels from the texture cache. The texels value are then used render each pixel. If these values are used without considering the neighboring texels in the texture cache, we get point-sampled results. Depending on the texture pattern, this may result in significant aliasing. As will described below, a variety of anti-aliasing options may be used to provide optimum texture mapping results. The selected texel values may then be used for modulating, replacing, decaling, or blending to achieve a final texture color value. This color is then subject to the usual operations in the graphics pipeline, including depth-cueing and compositing into frame buffer 100.

To texture map the remainder of the primitive, steps 340-380 are executed for the remainder of tiles in the texture space grid.

Host Processor Computations and Texture Map Transfer

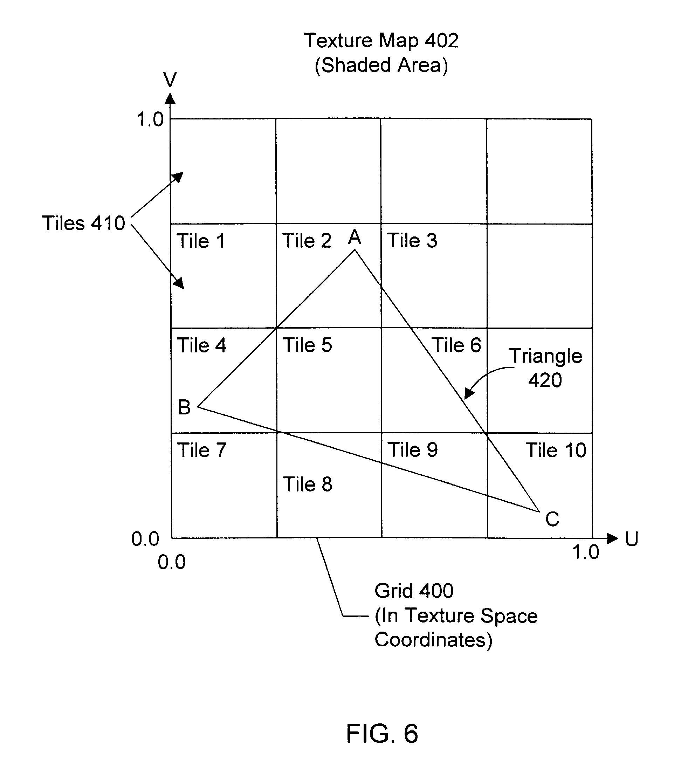

Referring now to Figure 6, an example of partitioning a geometric primitive is shown as described above with reference to step 330 in Figure 5. As depicted, a texture map 402 is mapped to a grid 400 measured in texture space coordinates u (along the horizontal axis) and v (along the vertical axis). In the embodiment shown in Figure 6, grid 400 is organized as a 4 x 4 array of tiles 410. A triangle 420 is also illustrated, representing a geometric primitive generated by a graphics application program in step 320.

In one embodiment, the grid lines for grid 400 are drawn 1/64 of the texture space distance apart. For example, if the texture map is 1024 x 1024, then each tile 410 in grid 400 consists of 16 x 16 (1024/64 x 1024/64) texels. In order to prevent aliasing effects, each tile 410 shares boundary texels with neighboring tiles, translating into 17 x 17 texels per tile 410.

As shown, triangle 420 covers all or parts of ten of tiles 410. To render triangle 420, each of the ten tiles 410 is processed separately. For a first tile 410 (e.g., tile 1), the corresponding portion of texture map 402 is downloaded to graphics accelerator 112.

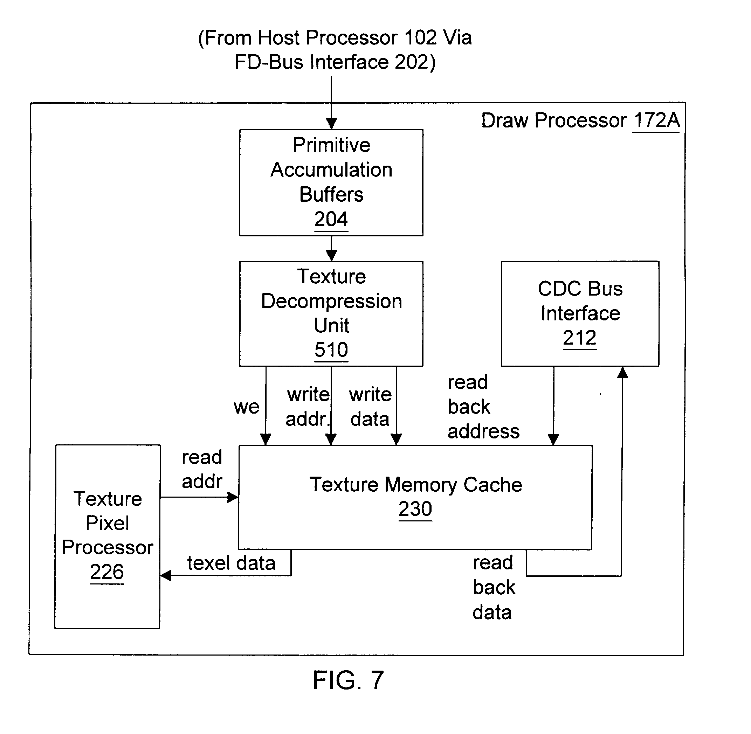

Referring now to Figure 7, the process of texture map transfer from host processor 102 to graphics accelerator 112 is described. Figure 7 depicts a portion of draw processor 172A (draw processor 172B is configured similarly), particularly the interface to the texture memory cache 230. Draw processor 172A as shown in Figure 7 includes a number of blocks previously described with reference to Figure 4: primitive accumulation buffers (PAB) 204, CDC bus interface 212, texture pixel processor 226, and texture memory cache 230. Draw processor 172A additionally includes texture decompression unit 510.

Draw processor 172A receives packets of compressed texels through the PAB 204. (The tile's data structure for texture cache is compressed in order to reduce memory bandwidth requirements on host bus 104). The texture decompression unit 510 then reads the compressed texels from PAB 204, decompresses them, and writes them into texture memory cache 230 in step 350.

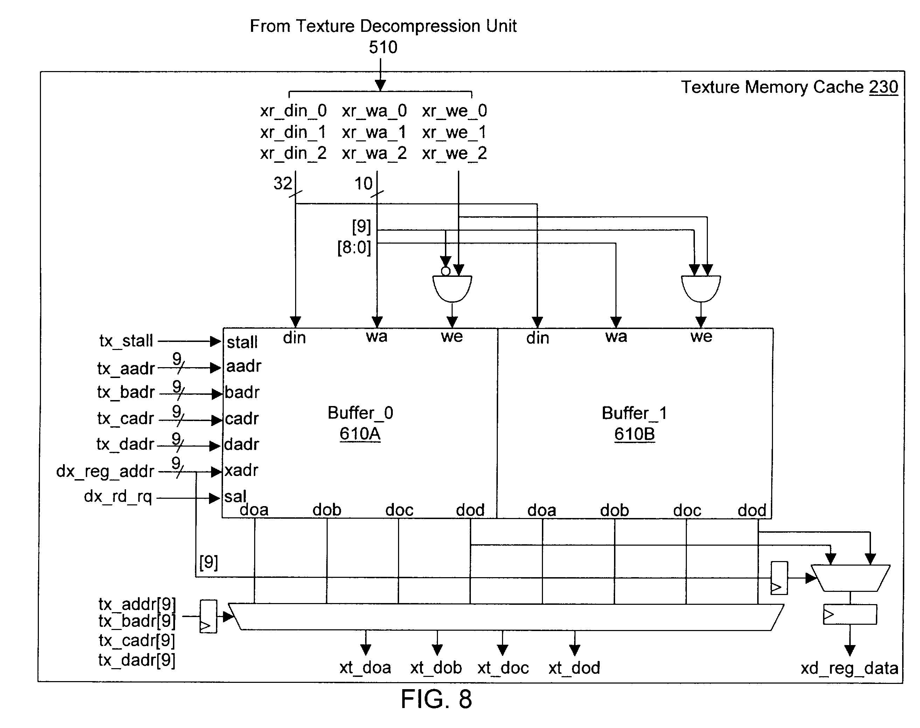

Referring now to Figure 8, a block diagram of texture memory cache 230 is shown. In the preferred embodiment, texture memory cache 230 includes two memory buffers, 610A and 610B. This allows cache 230 to be updated for the next tile while the sub-triangles for the current tile are being processed. In one embodiment, each buffer is 420 words by 32 bits each. To avoid texture decompression being a system bottleneck. texture memory cache 230 has three write ports (addressable to either buffer 610). Three decompressed texel values may thus be written to texture memory cache 230 simultaneously.

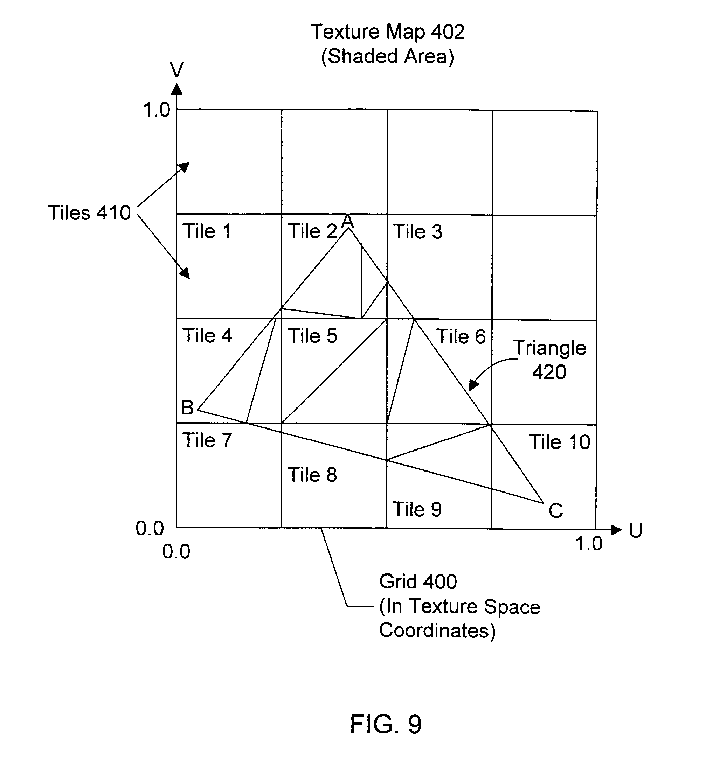

After the texture map for tile 1 is transferred to texture memory cache 230, host processor 102 then tessellates the portion of triangle 420 that lies within tile 1. Figure 9 illustrates one way in which triangle 420 may be tessellated for each of the 10 tiles 410. For example, tile 1 contains only a single sub-triangle, while tile 5, which is completely contained in the original triangle, contains two tessellated triangles. The tiles 410 in triangle 420 may be tessellated in a variety of other ways.

Next, the vertices for each tessellated sub-triangle in a given tile 410 are computed. For sub-triangle vertices on an edge of triangle 420, this is performed by the use of a simple line equation. For example, assume that the triangle vertices A and B are represented by $(u_a, v_a)$ and $(u_b, v_b)$ respectively. Edge AB then intersects the horizontal line $v=v_b$ at

$$u = u_a + \left( \frac{v_l - v_a}{v_b - v_a} \right) \cdot (u_b + u_a).$$

Similarly, other parameters such as x-y-z position coordinates, red-green-blue color values, and normal values can be obtained for sub-triangle vertices on an edge of triangle 420 by linear interpolation of their values at the A and B vertices. The interpolated normals, however, require re-normalization.

For triangle vertices at the grid points, their (u, v) values are directly known, and we can use an affine transformation to compute each position coordinate. For example, the formula for the x coordinate is

$$x = a \cdot u + b \cdot v + c.$$

The coefficients a, b and c in this equation may be determined by using this equation at each of three vertices of the original triangle. Similar equations exist for the y and z coordinates, as well as color and alpha components.

In a typical strip of triangles, many edges are shared by two adjacent triangles. When these two adjacent triangles are tessellated, it is desirable for the resulting sub-triangles (which share a vertex) not to have any gaps or overlaps, thereby avoiding "cracks" in the textured image. Each vertex that is shared between two or more sub-triangles must therefore have the same interpolated position values, whether it is computed as part of one original triangle or the other. This can be guaranteed by using the identical method in each of the two or more original triangles. Interpolation is performed using only two edge points, and not all three vertices of the triangle, and always in one direction, e.g. bottom-to-top. If linear interpolation using all three vertices were to be performed, the two or more adjacent sub-triangles may not produce numerically identical results.

There is no such problem for grid points within an original triangle such as triangle 420. Linear interpolation may be performed using all three vertices since this grid point is not shared between different triangles generated by host processor 102. In the preferred embodiment, this vertex value is computed only once, even if it is shared by many sub-triangles. Gaps in the textured image are thereby eliminated.

It is noted that in the preferred embodiment, triangles generated by a graphics application program executing on host processor 102 are tessellated once, with the results save for rendering at a later time. It is also desirable to package sub-triangles for a given tile 410 in such a way as to minimize the number of times the corresponding portion of texture map 402 is cached in texture memory cache 230.

Floating Point Computations for Texture Mapping

In step 370. host processor 102 transfers information corresponding to each of the newly created sub-triangles to graphics accelerator 112. These parameters are received by command block 142, where they are conveyed to one of floating point processors 152. Floating point processors 152 transform sub-triangles from model space to screen space, perform lighting calculations, clip the sub-triangles to the viewing volume, and perform set up for draw processor 172 operations (e.g.. edge walking and span interpolation of color, Z, and alpha values). Additionally, the floating point processors 152 set up the draws processors 172 for interpolating the homogeneous texture coordinates $u_h$, $v_h$, and $w_h$ on the surface of the triangle. The floating point processors 152 also aid the draw processors 172 in computing mip map level on a per-pixel basis.

Mip maps are particularly useful when the textured image is compressed onto a triangular surface, an operation called *minification.* As a result, several texels in the textured image may be compressed under a single pixel. It is thus important to use a weighted average of these texels to generate each pixel value. Otherwise, the textured image may appear aliased. This effect is particularly problematic during animation. If all the compressed texels are not considered (e.g., a point-sampling technique is used), the texture color is quantized to a single texel value. Since this texel value may change between frames of animation, unacceptable flashing and other visual defects may result. The amount of degradation varies in accordance with the texture pattern and the amount of minification.

The use of mip map levels is advantageous in that computing which texels are compressed under a single pixel is circumvented. Instead, the amount of compression is determined, which is used to select one of the mip map levels. Typically, this compression value lies between two adjacent pre-computed mip map levels, requiring interpolation of the texel values in each of the two mip maps. For example, we may, find that the compression value corresponds to a mip map level of 2.4. In one embodiment, the pre-computed level 2 mip map is used to determine texel values. In a different embodiment, the texel values from levels 2 and 3 are combined using a weighted average (60% of level 2 values and 40% of level 3 values).

In one embodiment, texel compression is computed by floating point processors 152 at the vertex of each sub-triangle generated by host processor 102. The per-pixel compression values are then linearly interpolated from the vertex values in draw processors 172. This approach is effective since the tessellated sub-triangles are relatively small (less than 16 pixels on a side) during minification, when mip map determination is of interest. The floating point processors 152 are also responsible for clipping all texture related parameters, including homogeneous texture coordinates and mip map compression levels. Additionally, processors 152 perform lighting operations on textured sub-triangles, and also compute derivatives $u_h$, $v_h$, and $w_h$ along the triangle edges for use by draw processors 172.

It is noted that in one embodiment, the value ($w_f/w$) is used instead of ($1/w$) for the homogeneous coordinate $w_h$. This value ranges between 1 at the front clipping plane and 0 at infinity. The quantity $w_f$ is the value of $w$ at the front clipping plane. This convention is used to simplify coordinate calculations in graphics accelerator 112. Similarly, $u_h$ and $v_h$ may be redefined as ($wf \cdot u/w$) and ($wf \cdot v/w$), respectively. After interpolations in draw processors 172, the u and v texture coordinate may be recovered at each pixel as ($u_h/w_h$) and ($v_h/w_h$). It is noted that $u_h$ and $v_h$ still range between 0.0 and 1.0.

Texel Compression

To compute texel compression for a given sub-triangle, first the linear compression at each of the three vertices is computed, followed by the respective derivatives along the edges and the horizontal direction. For example, the u texture coordinate is related to corresponding homogeneous coordinates and position values as follows:

$$u = \left(\frac{u_h}{w_h}\right) = \left(\frac{a \cdot x + b \cdot y + c}{g \cdot x + h \cdot y + i}\right).$$

Taking the partial derivative of u with respect to x,

$$\frac{\partial u}{\partial x} = \frac{w_h \cdot \frac{\partial u_h}{\partial x} - u_h \frac{\partial w_h}{\partial x}}{w_h^2}.$$

This may be rewritten as

$$\frac{\partial u}{\partial x} = \frac{w_h \cdot a - u \cdot w_h \cdot g}{w_h^2}$$

or

$$\frac{\partial u}{\partial x} = \frac{a - u \cdot g}{w_h}.$$

Here $a$ is the horizontal derivative along the X axis,

$$\left(\frac{\partial u_h}{\partial x}\right).$$

. Similarly, $g$ is the horizontal derivative of $w_h$ along the X axis. These computations are performed by floating point processors 152 as part of the set up calculations. The partial derivatives

$$\left(\frac{\partial u}{\partial y}\right), \left(\frac{\partial v}{\partial x}\right), \text{and} \left(\frac{\partial v}{\partial y}\right)$$

are also computed. The linear texel compression $C$ under a pixel is defined to be the largest of the absolute values of these derivatives:

$$C = \max\left(\frac{\partial u}{\partial x}, \frac{\partial u}{\partial y}, \frac{\partial v}{\partial x}, \frac{\partial v}{\partial y}\right).$$

Texture lighting

Floating point processors 152 compute two colors for interpolation by draw processors 172 for textured triangles with 3 or 4 color channels which are to be lighted and Gouraud shaded. One of these colors, with the usual components red, blue, and green, accounts for the effects of all ambient and diffuse lights, using white color as the diffuse object color. This color is then multiplied with the texture color in the draw processors 172, using the modulation function described below. The other color value accounts for specular lighting effects using specular color, which is a material property of an object that does not change from pixel to pixel. This color, with red, blue, and green components, is calculated in floating point processors 152, using only the specular terms of the lighting model. Processors 152 also compute the required derivatives for these colors.

In a different embodiment, the textured image is rendered in two passes, one time with the lighted texture, and the second time as a non-textured sub-triangle with only specular lights. The results of the two passes are then composited in frame buffer 100. It is noted that performance in this embodiment is not halved since the non-textured triangles are processed at relatively faster pace than the textured triangles.

Draw Processor Computations

Draw processors 172 interpolate the homogeneous texture coordinates on sample points within the triangle, and then determine the texture indices ($u = u_h/w_h$, $v = v_h/w_h$), which are used for looking into the appropriate mip map level. Then, depending upon the anti-aliasing option in use, processors 172 perform point sampling, or linear, bilinear, or trilinear interpolation to determine the texture value for each pixel. This pixel value is then used for modulating, replacing, decaling, or blending with a constant color value, which can be depth-cued and blended with the color in frame buffer 100.

Mip Map Level Determination

As described above, computer system provides a plurality of pre-calculated mip map levels (five, in one embodiment). Typically, however, the theoretical mip map level determined from compression values lies between two pre-computed levels. In order to provide smooth pixel transitions during animation, then, graphics accelerator 112 linearly interpolates between two pre-computed levels.

Since each map level is one half the linear dimension of the previous level, for a given texel compression value $C$ (calculated as above), the theoretical level is:

$$maplevel = log_2 C.$$

To allow the possibility of an original 1024 x 1024 texture map being compressed in a single pixel, eleven integer and five fractional bits are used for $C$ in one embodiment (denoted as 11.5 bits).

Typically, the theoretical map level will have a fractional component. In such a case, a determination is made of the two adjacent mip levels that bracket the theoretical level, followed by interpolation between them with a merging factor. The merging factor $m_f$ and the near mip map level $nl$ are given by the following equations:

$$nl = \log_2 C$$

and

$$m_f = \frac{C - 2^{nl}}{2^{nl}}.$$

The merging factor $m_f$ is the linear fractional distance between the levels $nl$ and $(nl + 1)$ (the linear distance between the two adjacent levels is $2^{nl}$). More accurately, it is expressed as the five least-significant fractional bits of:

$$mf = (C - (1 << (nl + 5))) >> nl.$$

In one embodiment, $nl = \log_2 C$ may be computed as the bit position of the first non-zero bit in the integer part of $C$, counting bit 0 as the right most bit. In one embodiment, there are five pre-computed levels of detail (and thus, five mip map levels). However, for a texture map of 1024 x 1024, there are actually a total of eleven levels. Thus, these extra six levels must also be addressable for more accurate anti-aliasing.

Texture Table Generation

After $u$ and $v$ are determined by division ($u = u_h/w_h$ , $v = v_h/w_h$), the respective integer portions are used to look up a texel value from the texture map. while the fractional portion may be used for bilinear interpolation. At level 0, the integer parts of $u$ and $v$, $u\_int$ and $v\_int,$ may be used as indices into a two-dimensional texture array. At level $m$, the corresponding indices are computed as ($u\_int >> m$) and ($v\_int >> m$), and the fractional values at level $m$ are the five least significant of ($u >> m$) and ($v >> m$).

Anti-aliasing Options

Computer system 80 supports the five options XGL allows for sampling or interpolating mip map levels. Two of these are for point sampling mip level 0, or the level nearest to the theoretical level. The third one deals with linear interpolation between point-sampled texels at the two mip map levels that bracket the theoretical level. The fourth option involves bilinear interpolation between four texels on the mip map level closest to the theoretical level. The last option deals with trilinear interpolation, which requires a final linear interpolation between the bilinear results on the two mip map levels that bracket the theoretical level. The interpolation between two mip maps is not performed if the mip map compression is less than or equal to 1.0, even if the application has selected such an option, since no mip maps more detailed than the level 0 map.

Point Sampling Options

If texel values are to be read from the level 0 mip map, the rounded values of scaled $u$ and $v$:

$$T = T[u_{round}, v_{round}]_0.$$

If the nearest map level is to be used (e.g.. level 2 for compression value 2.4), the merging factor is interrogated. If it is less than half, then

$$T = T[(u >> nl)_{rounded}, (v >> nl)_{rounded}]_{nl}$$

else

$$T = T[(u >> (nl + 1))_{rounded}, (v >> (nl + 1))_{rounded}]_{nl_{+1}}.$$

### Linear Interpolation Option

This option is used for merging two point samples, one from the near level, $nl$, and one from the next farther level, $fl$, to the theoretical level lying between these two. Let $T_n$ and $T_f$ represent the texel values from near and next farther levels. Then

$$T_n = T\,[(u >> nl)_{rounded},\ (v >> nl)_{rounded}]_{nl}$$

and

$$T_f = T[(u >> (nl+1))_{rounded},\ (v >> (nl+1)_{rounded}]_{fl}.$$

The final merged result is:

$$T = T_n \cdot (1.0 - m_f) + T_f \cdot m_f.$$

Since point-sampling is used, the fractional texel indices are discarded. It is noted that in one embodiment, 1.0 is actually represented in the binary form as 1.00000, with five fractional bits. On the other hand, $m_f$ contains only five bits of fraction with its integer part as zero.

### Bilinear Interpolation Option

This option is used for taking the weighted average of four texels from a single map (level 0 or the map level closest to the theoretical level in different embodiments). Let $(uint, vint)$ represent the integer portion of texel indices at the current mip map level, while $(ufrac, vfrac)$ represent the fractional components (including the right shift adjustment from the values at level 0). Then the bottom two texels are $(uint, vint)$ and $(uint+1, vint)$. Interpolating between them gives

$$T_{bot} = T[u_{int},\ v_{int}] \cdot (1.0 - u_{frac}) + T[u_{int} + 1, v_{int}] \cdot u_{frac}.$$

Similarly, the top two texels are $(uint, vint+1)$ and $(uint+1, vint+1)$. Interpolating between them gives

$$T_{top} = T[u_{int},\ v_{int} + 1] \cdot (1.0 - u_{frac}) + T[u_{int} + 1, v_{int} + 1] \cdot u_{frac}.$$

Finally, merging these two values, the final texel result is given by

$$T = T_{bot} \cdot (1.0 - v_{frac}) + T_{top} \cdot v_{frac}.$$

### Trilinear Interpolation Option

This is the most comprehensive option, involving eight samples, four from each of the near and far mip map levels. Bilinear interpolation is used at each of these two map levels, and the final linear interpolation involves the use of the merging function, $m_f$

$$T = T_n \cdot (1.0 - m_f) + T_f \cdot m_f$$

### Merging Options

Once the texture components for a pixel have been computed, we still have to compute the textured color. This rendering step involves modulating, replacing, decaling, or blending the sampled texel data into a final color value. The OpenGL notation is used herein to indicate the required operations. $C_f$ and $A_f$ represent the interpolated color and alpha values at the pixel fragment. The sampled texel values are represented by $L_t$ for a single channel, $L_t$ and $A_t$ for a two-channel texture, $C_t$ (three color components) for a three-channel texture, and $C_t$ and $A_t$ for a four-channel texture. The output color and alpha values are represented by $C_v$ and $A_v$, respectively.

<u>Modulation</u>

This mode can be used for modulating the object color. For example, with one channel texture, modulate mode could create a ripple effect to simulate the surface of an orange. The color and alpha values are

$$C_v = L_t \cdot C_f \text{ and } A_v = A_f$$

The $C_v$ equation is made up of three separate equations for the red, blue, and green components.
In the two channel mode, the color and alpha values are given by

$$C_v = L_t \cdot C_f \text{ and } A_v = A_t \cdot A_f$$

In three-channel mode, each of the three color channels is multiplied by the corresponding component from the texture table:

$$C_v = C_t \cdot C_f \text{ and } A_v = A_f$$

This can be used for texture lighting, where the texture color serves as the object diffuse color.
For the four channel case, alpha is also multiplied:

$$C_v = C_t \cdot C_f \text{ and } A_v = A_t \cdot A_f$$

<u>Replacement</u>

In this mode, the sampled texture replaces the interpolated color value, and alpha is not affected:

$$C_v = C_t \text{ and } A_v = A_f$$

<u>Decaline</u>

This mode is available only with four channels. It blends the interpolated color and the sampled texture color. using the alpha channel of texture:

$$C_v = (1-A_t) \cdot C_f + A_t \cdot C_t \text{ and } A_v = A_f$$

This mode may be used for translucent texture effects. It may also be used to create the effect of a non-rectangular raster image by assigning different values to the alpha components in the texture map.

<u>Blending</u>

This mode is available for one and two channels texture only. In the one-channel mode, it is used to blend the interpolated color with a constant color, $C_c$. This color is identified as Texture Environment Color in the OpenGL standard. Color and alpha are given by

$$C_v = (1-L_t) \cdot C_f + L_t \cdot C_c \text{ and } A_v = A_f$$

In the two-channel mode, it modifies alpha also:

$$A_v = A_t \cdot A_f$$

Although the system and method of the present invention has been described in connection with the described embodiments, it is not intended to be limited to the specific form set forth herein, but on the contrary, it is intended to cover such alternatives. modifications, and equivalents, as can be reasonably included within the scope of the invention.

## Claims

1. A method for texture mapping a geometric primitive, comprising:

   receiving data describing a first region of said geometric primitive;
   receiving a first portion of a texture map into a texture memory cache, wherein said first portion of said texture map corresponds to said first region of said geometric primitive;
   texture mapping said first region of said geometric primitive according to said first portion of said texture map stored in said texture memory cache.

2. The method of claim 1, furthering comprising partitioning said geometric primitive into a plurality of regions which include said first region.

3. The method of claim 2, wherein said texture map includes a plurality of portions which include said first portion.

4. The method of claim 3, wherein each of said plurality of regions in said geometric primitive has a corresponding texture map portion included in said plurality of portions.

5. The method of claim 4, wherein said texture memory cache has a storage capacity sufficient to store texture data for a given one of said plurality of portions of said texture map.

6. The method of claim 1, further comprising dividing said first region of said geometric primitives into one or more micro-primitives.

7. The method of claim 6, wherein said texture mapping said first region of said geometric primitive includes texture mapping each of said one or more microprimitives.

8. The method of claim 6, wherein said one or more micro-primitives includes triangle primitives.

9. The method of claim 1, further comprising:

   receiving data describing a second region of said geometric primitive;
   receiving a second portion of a texture map into a texture memory cache, wherein said second portion of said texture map corresponds to said second region of said geometric primitive;
   texture mapping said second region of said geometric primitive according to said second portion of said texture map stored in said texture memory cache.

10. The method of claim 2, further comprising:

    receiving data describing a next region of said geometric primitive;
    receiving a next portion of a texture map which corresponds to said next region of said geometric primitive into a texture memory cache;
    texture mapping said next region of said geometric primitive according to said next portion of said texture map stored in said texture memory cache;
    repeating said receiving data, said receiving said next portion of said texture map, and said texture mapping for all of said plurality of regions in said geometric primitive.

11. The method of claim 1, further comprising utilizing results of said texture mapping to render pixels within said first region of said geometric primitive.

12. The method of claim 1. wherein said texture map includes texture data corresponding to a first texture image. and wherein said texture map includes a plurality of mip map levels, wherein each of said plurality of mip map levels includes texture data which represents said first texture image at a corresponding resolution.

13. The method of claim 12, wherein said first portion of said texture map stored within said texture memory cache includes a first set of mip map level values.

14. The method of claim 13, further comprising computing one or more compression values for said first region of said geometric primitive, wherein said one or more compression values are usable to access texture data from an appropriate one of said first set of mip map level values.

15. The method of claim 1, wherein said data describing said first region of said geometric primitive includes one or more texture map coordinates, wherein said texture map coordinates are usable to access texture data within said first portion of said texture map which is stored in said texture memory cache.

16. The method of claim 1, wherein said method is performed in a computer system.

17. The method of claim 16, wherein said computer system includes a system memory, wherein said system memory is configured to store said texture map.

18. The method of claim 17, wherein said computer system includes a graphics sub-system which includes said texture memory cache.

19. The method of claim 18, wherein said graphics sub-system includes a texture processor coupled to said texture memory cache, wherein said texture processor is configured to perform said texture mapping.

20. The method of claim 1, wherein said geometric primitive is included in a plurality of geometric primitives which represent a 3-D graphical object.

21. A graphics sub-system configured to perform texture mapping upon a geometric primitive, comprising:

  a texture processing unit coupled to receive data corresponding to a first region of said geometric primitive;
  a texture memory cache coupled to receive texture data corresponding to a first portion of a texture map, wherein said first portion of said texture map corresponds to said first region of said first geometric primitive;
  wherein said texture processing unit is configured to perform texture mapping on said first region of said geometric primitive according to said first portion of said texture map stored in said texture memory cache.

22. The graphics sub-system of claim 21, wherein said data corresponding to a first region of said geometric primitive includes a plurality of a micro-primitives formed by division of said first region of said geometric primitive.

23. The graphics sub-system of claim 22, wherein said texture processing unit is configured to texture map each of said one or more micro-primitives.

24. The graphics sub-system of claim 22, wherein said one or more micro-primitives includes triangle primitives.

25. The graphics sub-system of claim 21, wherein said geometric primitive includes a plurality of regions including said first region, and wherein said graphics sub-system is configured to perform texture mapping on each of said plurality of regions by utilizing data representing each of said plurality of regions and a corresponding texture map portion stored in said texture memory cache.

26. The graphics sub-system of claim 21, further comprising a rasterization unit coupled to said texture processing unit, wherein said rasterization unit is configured to utilize output of said texture processing unit to render pixels located within said first region of said geometric primitive.

27. The graphics sub-system of claim 21, wherein said data corresponding to said first region of said geometric primitive includes one or more texture map coordinates, wherein said texture map coordinates are usable to access texture data within said first portion of said texture map which is stored in said texture memory cache.

**28.** The graphics sub-system of claim 21, wherein said texture memory cache includes a plurality of buffers, wherein said first portion of said texture map is stored in a first of said plurality of buffers, and wherein said texture memory cache is configured to receive a second portion of said texture map in a second of said plurality of buffers concurrently with said texture processing unit accessing texture data from said first of said plurality of buffers.

**29.** The graphics sub-system of claim 28, wherein said second portion of said texture map corresponds to a second region of said geometric primitive.

**30.** A computer system configured to perform texture mapping of a geometric primitive, comprising:

a host processor;
a system memory coupled to said host processor, wherein said system memory stores a texture map which includes texture data corresponding to a given texture image;
a graphics sub-system coupled to said host processor and said system memory, wherein said graphics sub-system includes:

a texture processing unit:
a texture memory cache;

wherein said host processor is configured to convey information describing a first portion of said geometric primitive to said texture processing unit within said graphics sub-system, and wherein said host processor is configured to convey a first portion of said texture map to said texture memory cache within said graphics sub-system, wherein said first portion of said texture map corresponds to said first portion of said geometric primitive;
and wherein said texture processing unit is configured to perform texture mapping of said first region of said geometric primitive by utilizing said first portion of said texture map stored in said texture memory cache.

**31.** The computer system of claim 30, wherein said host processor is configured to partition said geometric primitive into a plurality of regions which include said first region.

**32.** The computer system of claim 31, wherein said texture map includes a plurality of portions which include said first portion.

**33.** The computer system of claim 32, wherein each of said plurality of regions in said geometric primitive has a corresponding texture map portion included in said plurality of portions.

**34.** The computer system of claim 33, wherein said texture memory cache has a storage capacity sufficient to store texture data for a given one of said plurality of portions of said texture map.

**35.** The computer system of claim 30, wherein said host processor is configured to dividing said first region of said geometric primitives into one or more micro-primitives.

**36.** The computer system of claim 35, wherein said host processor is configured to convey said one or more micro-primitives to said graphics sub-system.

**37.** The computer system of claim 36, wherein said texture processing unit is configured to perform texture mapping on each of said one or more micro-primitives using texture data from said first portion of said texture map stored in said texture memory cache.

**38.** A graphics sub-system for texture mapping a geometric primitive, comprising:

a texture processing means for receiving data describing a first region of said geometric primitive;
a texture memory caching means for receiving a first portion of a texture map, wherein said first portion of said texture map corresponds to said first region of said geometric primitive;
wherein said texture processing means is configured to perform texture mapping of said first region of said geometric primitive according to said first portion of said texture map stored in said texture memory caching means.

80

84

82

86

88

Computer

FIG. 1

FIG. 2

EP 0 890 925 A2

UPA-Bus 104

/64

AFB Command
142

/2
/32
/16
/16

11
11
11

8
8
8

CF-Bus

| AFB Float 152A | 36 / | SRAM | AFB Float 152B | 36 / | SRAM | AFB Float 152C | 36 / | SRAM | AFB Float 152D | 36 / | SRAM | AFB Float 152E | 36 / | SRAM | AFB Float 152F | 36 / | SRAM |

11 11
153A

11 11
153B

11 11
153C

11 11
153D

11 11
153E

11 11
153F

FD Bus

DC Bus /16

AFB Draw
172A

/16

AFB Draw
172B

| 3DRAM | 3DRAM | | 3DRAM | 3DRAM |
| 3DRAM | 3DRAM | | 3DRAM | 3DRAM |
| 3DRAM | 3DRAM | | 3DRAM | 3DRAM |

192A       192B    194A        194B       100

Misc. Bus /8

/16

RAMDAC
196

Audio DRAM

Audio

Boot PROM

Serial Ports    Audio Output    Video Output

To Display Device 84

FIG. 3

FIG. 4

300

```
Store Texture Map to System
Memory
310
```
↓
```
Generate Data for A
Geometric Primitive To Be
Texture Mapped
320
```
↓
```
Partition the Primitive
According to a Grid of Tiles in
Texture Space
330
```
↓
```
Transfer a Portion of the
Texture Map Corresponding
to One of the Tiles to the
Graphics Accelerator
340
```
↓
```
Store the Transferred Texture
Map Portion in the Graphics
Accelerator Texture Memory
Cache
350
```
↓
```
Tessellate Portion of Primitive
Corresponding to the
Transferred Tile Into Sub-
Polygons
360
```
↓
```
Transfer Information
Corresponding to Each of
Tessellated Sub-Polygons to
the Graphics Accelerator
370
```
↓
```
Process and Render Each
Tessellated Sub-Polygon
380
```

FIG. 5

Texture Map 402
(Shaded Area)

FIG. 6

Draw Processor <u>172A</u>

Primitive
Accumulation
Buffers
<u>204</u>

Texture
Decompression
Unit
<u>510</u>

CDC Bus
Interface
<u>212</u>

we

write
addr.

write
data

read
back
address

Texture
Pixel
Processor
<u>226</u>

read
addr

Texture Memory Cache
<u>230</u>

texel data

read
back
data

FIG. 7

EP 0 890 925 A2

From Texture Decompression Unit
510

Texture Memory Cache 230

xr_din_0  xr_wa_0  xr_we_0
xr_din_1  xr_wa_1  xr_we_1
xr_din_2  xr_wa_2  xr_we_2

32          10

[9]
[8:0]

tx_stall ──────► stall      din        wa        we        din        wa        we

tx_aadr ──9──► aadr

tx_badr ──9──► badr

tx_cadr ──9──► cadr                Buffer_0                          Buffer_1

tx_dadr ──9──► dadr                 610A                              610B

dx_reg_addr ──9──► xadr

dx_rd_rq ──────► sal
                    doa       dob       doc       dod       doa       dob       doc       dod

[9]

tx_addr[9]
tx_badr[9]
tx_cadr[9]
tx_dadr[9]

                    xt_doa    xt_dob   xt_doc    xt_dod                          xd_reg_data

FIG. 8

Texture Map 402
(Shaded Area)

FIG. 9